# EUROPÄISCHE PATENTSCHRIFT

(11) **EP 0 938 617 B1**
(45) Veröffentlichungstag und Bekanntmachung des Hinweises auf die Patenterteilung: **27.02.2002**
(21) Anmeldenummer: 97913183.6
(22) Anmeldetag: 29.10.1997
(51) Int. Cl.: E05B 49/00, B60R 25/04, E05B 17/22

(54) **VORRICHTUNG MIT EINEM SCHLÜSSELBETÄTIGBAREN SCHLIESSZYLINDER UND MIT EINER ELEKTRISCHEN SCHALTEINRICHTUNG, INSBESONDERE ELEKTRONISCHE WEGFAHRSPERRE FÜR EIN KRAFTFAHRZEUG**
DEVICE WITH A KEY-OPERATED LOCK CYLINDER AND WITH AN ELECTRICAL SWITCHING DEVICE, IN PARTICULAR AN ELECTRONIC LOCK FOR PREVENTING A VEHICLE FROM BEING DRIVEN AWAY
DISPOSITIF MUNI D'UN CYLINDRE DE FERMETURE POUVANT ETRE ACTIONNE AVEC UNE CLEF ET D'UN SYSTEME DE COMMUTATION ELECTRIQUE, NOTAMMENT UN SYSTEME DE BLOCAGE ELECTRONIQUE INTERDISANT L'USAGE NON AUTORISE D'UNE AUTOMOBILE

(30) Priorität: 05.11.1996 DE 19645461
(43) Veröffentlichungstag der Anmeldung: 01.09.1999
(73) Patentinhaber: HUF HÜLSBECK & FÜRST GMBH & CO. KG, 42551 Velbert (DE)
(72) Erfinder: KEMMANN, Harald, D-42555 Velbert (DE); REIKHER, Alexander, Germantown, WI 53022 (US); SIMON, Jörg, D-42579 Heiligenhaus (DE)
(74) Vertreter: Mentzel, Norbert, Dipl.-Phys.
(86) Internationale Anmeldenummer: EP9705955
(87) Internationale Veröffentlichungsnummer: WO9820221

(56) Entgegenhaltungen:
- DE-A- 19 547 304
- US-A- 4 901 053
- US-A- 5 551 267

## Beschreibung

Die Erfindung richtet sich auf eine Vorrichtung der im Oberbegriff des Anspruches 1 angegebenen Art. Im Bereich des Schließzylinders gibt es sowohl mechanische als auch elektrische Bauteile, die bei einer Schlüsselbetätigung über die elektrische Schalteinrichtung elektrische Funktionen wirksam bzw. unwirksam setzen. Der Schließzylinder besteht aus einem ortsfesten Zylindergehäuse und einem darin drehgelagerten Zylinderkern, der durch einen bestimmten, ordnungsgemäßen Schlüssel drehbar ist. Die mechanischen Bauteile umfassen einen Schlüsselkanal zur Aufnahme des Schlüssels und Zuhaltungen im Zylinderkern und einen Sperrkanal für die Zuhaltungen im Zylindergehäuse. Zu den elektrischen Bauteilen gehört mindestens ein Permanentmagnet am Umfang des Zylinderkerns und ein Sensor im Zylindergehäuse, der bei der Schlüsselbetätigung des Zylinderkerns auf den Permanentmagneten anspricht. Der Sensor ist an einen Auswerter angeschlossen, der bei der Schlüsselbetätigung die elektrische Schalteinrichtung aktiviert. Der Schließzylinder einer solchen Vorrichtung wird vorzugsweise als Lenkschloß im Bereich der Lenksäule eines Kraftfahrzeugs angeordnet, wobei die elektrische Schalteinrichtung die Elektronik des Motors beinhaltet. Derartige Vorrichtungen dienen zur Diebstahlsicherheit des Kraftfahrzeugs. Man bezeichnet die Vorrichtung dann als elektronische Wegfahrsperre.

Eine solche Vorrichtung ist durch die US-PS 51 86 031 bekannt. Bei dieser Vorrichtung war eine Diebstahlsicherheit auch dann gegeben, wenn der Dieb den Zylinderkern des Schließzylinders aus dem Zylindergehäuse axial herausriß, um Manipulationen im Inneren des Zylindergehäuses vorzunehmen. Bei dieser bekannten Vorrichtung besaß der Zylinde- kern ein radial gefedertes Halteglied, das beim Einbau des Zylinderkerns hinter eine Schulter im Zylindergehäuse schnappte. Damit war ein bequemer axialer Einbau des Zylinderkerns im Zylindergehäuse möglich. Beim axialen Herausreißen des Zylinderkerns durch den Dieb zerstörte das Halteglied die elektrischen Verbindungen des Sensors im Zylindergehäuse und machte dadurch die Vorrichtung unbrauchbar. Diese Diebstahlsicherheit versagte aber, wenn es gelang, das federelastische Halteglied durch ein Einbruchwerkzeug in seine Freigabeposition gegenüber dem Zylindergehäuse zu überführen. Keine Diebstahlsicherheit gab es aber bei jenen Vorrichtungen, wo der Zusammenhalt zwischen dem Zylinderkern und dem Zylindergehäuse nicht durch eine solche Schnappverbindung erfolgte. Das hatte folgende Ursache.

Die Diebstahlsicherheit von mit solchen Schließzylindern ausgerüsteten Fahrzeugen besteht darin, daß es eine Vielzahl von unterschiedlichen Schließzylindern gibt, wo die Zuhaltungen in vielen unterschiedlichen Varianten im Zylinderkern angeordnet sind. Eine Drehung des Zylinderkerns ist nämlich nur durch einen bestimmten, zu diesem Zylinderkern passenden Schlüssel möglich. Während das Zylindergehäuse einen einheitlichen Aufbau aufweist, gibt es eine große Vielzahl unterschiedlicher Schlüssel mit entsprechend individuell angeordneten Zuhaltungen im Zylinderkern. Um ein mit einem Schließzylinder ausgerüstetes Schloß aufzubrechen, für das der ordnungsgemäße Schlüssel fehlt, genügt es, wenn der Dieb den Zylinderkern herausreißt und durch einen neuen Zylinderkern ersetzt, für den er den zugehörigen Schlüssel besitzt. Das Zylindergehäuse merkt nicht, daß der ursprüngliche Zylinderkern durch einen neuen Zylinderkern mit passendem Schlüssel ersetzt wurde. Diese Diebstahlmethode funktioniert auch bei der bekannten Vorrichtung, wo der Zylinderkern einen Permanentmagneten und das Zylindergehäuse einen Sensor aufweist. Der mit dem Schlüssel gekaufte neue Zylinderkern besitzt ja auch einen Permanentmagneten, der dann im Inneren des Zylindergehäuses anstelle des Permanengmagneten vom herausgerissenen Zylinderkern die gleiche Funktionen übernehmen kann. Es ist bei der bekannten Vorrichtung keine ausreichende Sicherheit gegeben.

Der Erfindung liegt die Aufgabe zugrunde, eine zuverlässige Vorrichtung der im Oberbegriff von Anspruch 1 angegebenen Art zu entwickeln, die sich durch eine hohe Sicherheit gegenüber Manipulationen am Schließzylinder durch unbefugte Personen auszeichnet. Dies wird erfindungsgemäß durch die im Kennzeichen des Anspruches 1 angegebenen Maßnahmen erreicht, denen folgende besondere Bedeutung zukommt.

Die Erfindung führt eine neue Variante in den Schließzylindern der bekannten Vorrichtung ein. Es gibt jetzt nicht nur eine Schar von Zylinderkernen mit unterschiedlicher Anordnung ihrer Zuhaltungen, die zwar zueinander unterschiedliche Schlüssel erfordern, aber mit einem einheitlichen Zylindergehäuse zusammenwirken können, sondern auch Zylinderkerne, die sich in magnetischer Hinsicht voneinander unterscheiden, dennoch aber im gleichen Zylindergehäuse eingebaut werden können. Bei der Erfindung gibt es also Schließzylinder mit identischem Gehäuse, die nicht nur mechanisch durch ihren Schlüssel-Code, sondern auch elektrisch durch einen "Magnetcode" sich voneinander unterscheiden. Wenn nun ein Dieb bei der erfindungsgemäßen Vorrichtung den Zylinderkern mit seinem Permanentmagneten herausreißt und durch einen neuen, ebenfalls einen Permanentmagneten aufweisenden Zylinderkern ersetzt, kann er, obwohl er über den passenden Schlüssel verfügt, die erfindungsgemäße Vorrichtung nicht überlisten. Wegen der erfindungsgemäßen Unterschiede in den Permanentmagneten der verschiedenen Zylinderkerne wird nämlich der so zusammengebaute neue Schließzylinder normalerweise einen anderen Magnetcode besitzen, der vom Sensor erkannt wird und daher bei der Schlüsselbetätigung des eingebauten neuen Zylinderkerns den Auswerter nicht wirksam setzt. Der Auswerter ist bei der Erfindung noch auf den alten Code eingestellt bzw. einprogrammiert. Der Austausch des Zylinderkerns bringt dem Dieb bei der erfindungsgemäßen Vorrichtung nichts; der Sensor erkennt den "falschen Zylinderkern". Die elektrische Schalteinrichtung wird daher nicht aktiviert. Der Diebstahl ist mißlungen.

Ein besonders einfacher Aufbau und eine preiswerte Herstellung der Vorrichtung ergeben sich, wenn man bei einer, einem einheitlichen Zylindergehäuse zugeordneten Gruppe magnetisch verschiedener Zylinderkerne nicht nur die gleiche Anzahl von Permanentmagneten verwendet, sondern diese auch an der gleichen Stelle in den einzelnen Zylinderkernen anordnet. Es genügt nämlich, die magnetischen Unterschiede durch eine Varianz der Feldrichtung zu bewirken, was bequem beim Anbringen der Permanentmagneten an den einzelnen Zylindern erreicht werden kann. Man verwendet Permanentmagnete, die eine bestimmte Lage ihrer Nordpol-Südpol-Richtung aufweisen und Sensoren, welche die Feldrichtung des Magnetfeldes detektieren können. Die Varianzvielfalt des Magnetcodes hängt nur von der Genauigkeit dieser Sensoren ab, unterschiedliche Feldrichtungen des Magnetfeldes unterscheiden zu können. Die gewählte Drehlage des Permanentmagneten bei dessen Montage am Zylinderkern bestimmt den Magnetcode. Das ist sehr einfach auszuführen. Die Vorrichtungen nach der Erfindung lassen sich auf diese Weise sehr preiswert herstellen. Außerdem läßt sich über den Sensor die Richtung des Magnetfeldes überraschend genau ermitteln und damit eine gute, zuverlässige Unterscheidbarkeit der verschiedenen Magnetcodes erreichen.

Von weiterem Vorteil ist es, eine an sich nur der mechanischen Sicherheit dienende Sperrleiste im Zylinderkern, wie sie an sich im Stand der Technik bereits bekannt ist, in die erfindungsgemäße Vorrichtung dadurch einzubeziehen, daß man Sperrleiste bereits als einen Permanentmagneten ausbildet. Die sich daraus ergebenden Vorteile sind in der nachfolgenden Beschreibung angeführt.

Weitere Maßnahmen ergeben sich aus den Unteransprüchen, den Zeichnungen und dem nachfolgenden Text. Die Erfindung richtet sich dabei auf alle daraus entnehmbaren neuen Merkmale und Merkmalskombinationen, auch wenn diese nicht ausdrücklich in den Ansprüchen angeführt sein sollten. In den Zeichnungen ist die Erfindung schematisch in einem Ausführungsbeispiel dargestellt. Es zeigen:
- Fig. 1: einen Querschnitt durch einen Schließzylinder der erfindungsgemäßen Vorrichtung, längs der Schnittlinie I-I von Fig. 2,
- Fig. 2,: im Ausbruch und im Längsschnitt, die Draufsicht auf einen Axialabschnitt des Schließzylinders in Blickrichtung des Pfeils 11 von Fig. 1,
- Fig. 3: ein Blockschaltbild über den prinzipiellen Aufbau des an den Sensor angeschlossenen Auswerters nach der Erfindung, und
- Fig. 4: in einem Arbeitstdiagramm den Ablauf der vom Sensor ermittelten Magnetfeldänderungen bzw. die sich daraus ergebenden Spannungs-Eingangswerte im Auswerter beim Einstecken des Schlüssels und Drehen des Zylinderkerns.

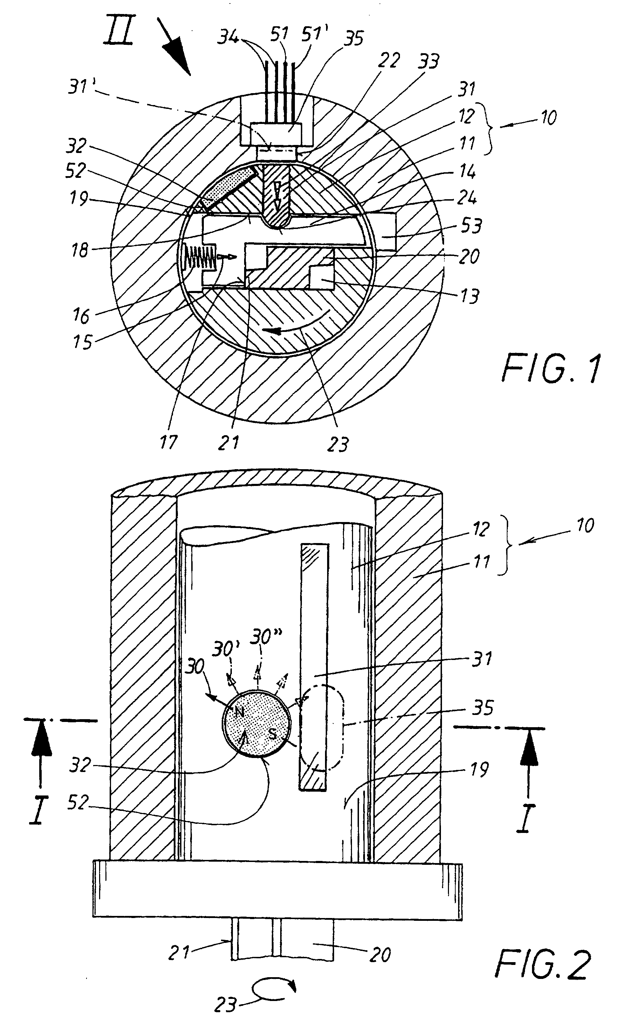

In den Zeichnungen sind nur die wesentlichsten Teile der Vorrichtung gezeigt und sind durch weitere konventionelle Bauteile zu vervollständigen. Gezeigt ist ein Schließzylinder 10, bestehend aus einem ortsfest in einem Kraftfahrzeug, z. B. im Bereich des Lenkschlosses, angeordneten Zylindergehäuse 11, das hülsenförmig gestaltet sein kann und dessen Hülseninneres zur Drehlagerung eines Zylinderkerns 12 dient. Der Zylinderkern 12 ist der andere Bestandteil des Schließzylinders 10 und besitzt einen Schlüsselkanal 13 für einen Schlüssel 20. Außerdem sind im Zylinderkern 12 eine Schar von Zuhaltungen 14 integriert, die zum Schlüsselkanal 13 hin unter einer Federbelastung stehen. Das ist in Fig. 1 durch einen Kraftpfeil 15 verdeutlicht. Die Federbelastung geht von schematisch eingezeichneten Federn 16 aus. Ist der Schlüssel 20 nicht eingesteckt, so ragen die Zuhaltungen 14 in einen Sperrkanal 53 im Zylindergehäuse 11 ein. Der Schlüssel 20 hat geeignete Stellmittel 21, z. B. Einschnitte, die ein bestimmtes Profil aufweisen und mit einer dazu passenden Steuerfläche 17 der diversen Zuhaltungen 14 zusammenwirken, wenn der Schlüssel eingesteckt ist. Dann sind die Zuhaltungen 14 nicht mehr mit dem Sperrkanal 53 in Eingriff, wie Fig. 1 zeigt.

In einer axialen Aussparung des Zylinderkerns 12 ist eine im wesentlichen radial bewegliche Sperrleiste 31 angeordnet, die unter einer durch den Kraftpfeil 33 in Fig. 1 veranschaulichten Federbelastung steht. Die Federbelastung 33 ist zwar bestrebt, die Sperrleiste in ihrer ausgezogen in Fig. 1 angedeutete Absenklage zu halten, aber normalerweise daran durch die Zuhaltungen 14 gehindert. Wenn nämlich nicht der passende 20 voll im Schlüsselkanal 13 steckt, nehmen die Zuhaltungen 14 aufgrund ihrer Federbelastung 15 eine ungeordnete Position im Zylinderkern 12 ein und das Innenende der Sperrleiste 31 stützt sich an verschiedenen Stellen der einen Längskante 18 der einzelnen Zuhaltungen 14 ab. Dadurch ragt der Außenbereich der Sperrleiste radial über den Zylinderumfang 19 hinaus und befindet sich in der strichpunktiert in Fig. 1 verdeutlichten Lage 31'. In dieser strichpunktierten Lage 31' greift die Sperrleiste in eine im Gehäuse 11 vorgesehene Nut 22 hinein und verhindert dadurch eine im Sinne des Drehpfeils 23 von Fig. 1 verdeutlichte Zylinderdrehung. Damit erweist sich die strichpunktierte Lage 31' der Leiste als ihre "Sperrlage".

Steckt aber der ordnungsgemäße Schlüssel 20 in dem Zylinderkern 12, dann werden die diversen Zuhaltungen 14 im Inneren des Zylinderkerns 12 durch die Schlüssel-Bahnen 21 so positioniert, daß eine in ihrem Kantenbereich vorgesehene Randaussparung 24 mit dem Innenbereich der Sperrleiste 31 ausgerichtet ist. In diesem Fall kann also die Sperrleiste aufgrund ihrer Federbelastung 33 in die ausgerichteten Randaussparungen 24 einfahren und wird dadurch in ihre ausgezogen in Fig. 1 gezeichnete Lage 31 abgesenkt, in welcher ihr Außenende nicht mehr den Zylinderumfang 19 radial überragt. In dieser ausgezogenen Lage 31 greift also die Sperrleiste 31 nicht mehr in die Gehäusenut 22 ein, weshalb sich diese Leistenlage 31 als "Freigabelage" erweist. Jetzt kann der Zylinderkern 12 über den eingesteckten Schlüssel 20 im Sinne des Pfeils 23 gedreht werden. Nicht näher gezeigte Drehanschläge verhindern eine Drehung des Zylinderkerns 12 in eine zum Drehpfeil 23 gegensätzlichen Richtung.

Außerdem sorgen nicht näher gezeigte Impulsfedern od. dgl. dafür, daß der Zylinderkern 12, wenn keine Schlüsseldrehung 23 erfolgt, stets in seiner in Fig. 1 gezeigten Ausgangsdrehstellung gehalten wird. In dieser Ausgangs-drehstellung ist das Außenende der normalerweise in ihrer Sperrlage 31' befindlichen Sperrleiste mit einem auf Magnetfelder ansprechenden Sensor 35 ausgerichtet, der sich im Zylindergehäuse 11 befindet.

Dieser Sensor kann aus einem Hall-Element bestehen. Es empfiehlt sich aber, hier ein sogenanntes magneto-resistives Element zu verwenden, das auch auf Richtungsänderungen des Magnetfeldes anspricht. Das wird noch nachfolgend näher beschrieben. Der Sensor 35 ist in einem Ausbruch des Gehäuses 11 untergebracht und befindet sich im Raum oberhalb der in der Sperrlage 31' wirksamen Gehäusenut 22. Die Sperrleiste 31 ist im vorliegenden Fall selbst ein Permanentmagnet. Alternativ könnte man für die Sperrleiste 31 ferromagnetisches Material verwenden, das von dem Magnetfeld eines im Zylinderkern an einer anderen Stelle angeordneten Permanentmagneten beaufschlagt wird und dann dadurch selbst Magnet wird. Wie Fig. 2 zeigt, ist die Sperrleiste 31 achsparallel zum Zylinder 12 angeordnet.

In einer Abwandlung des Ausführungsbeispiels ist es aber auch möglich, die Sperrleiste 31 nicht magnetisch auszubilden, wenn man auf die nachfolgend noch näher zu beschreibende Überwachungs-Funktion beim Einstecken des Schlüssels 20 verzichten will. Es gibt nämlich im Zylinderkern 12 mindestens noch einen weiteren Permanentmagneten 32, der aber, im Gegensatz zur magnetischen Sperrleiste 31, unbeweglich am Zylinderkern 12 angeordnet ist.

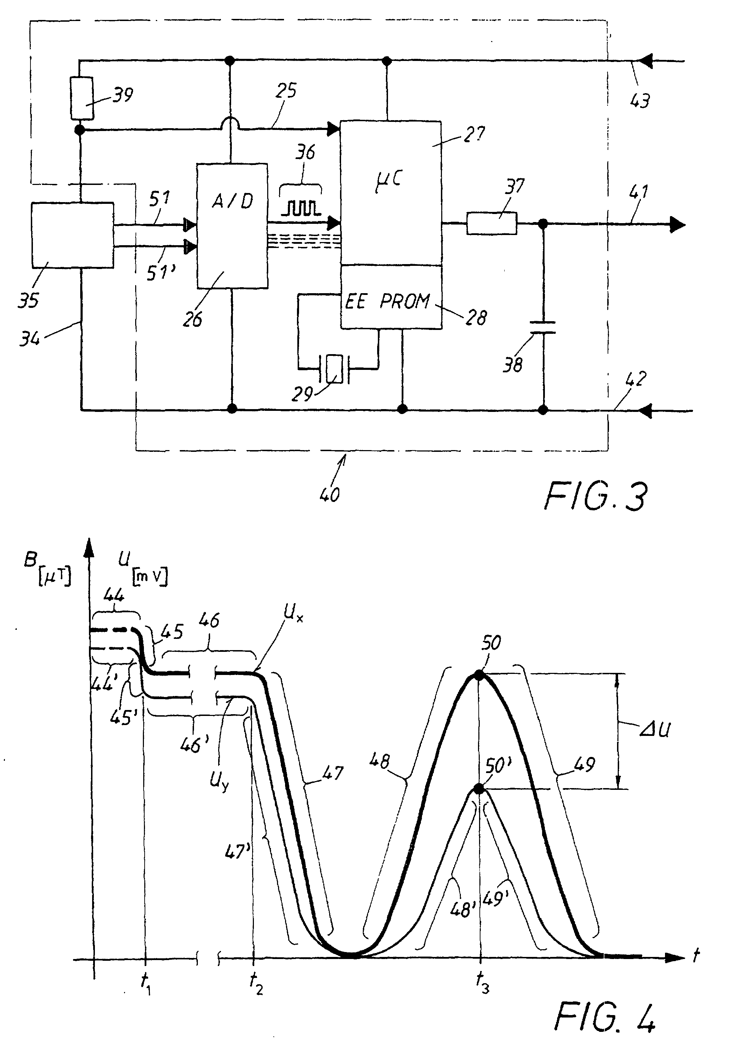

Der Permanentmagnet 32 ist in Fig. 1 und 2 durch Punktschraffur an einer bestimmten Umfangsstelle des Zylinderkern 12 angeordnet, die gegenüber der Sperrleiste 31 versetzt ist. Die Richtung des Magnetfeldes vom Permanentmagneten 32 ist durch seinen Nordpol N und seinen Südpol S veranschaulicht und ist durch den Pfeil 30 in Fig. 2 verdeutlicht. Der Permanentmagnet 32 ist in einer vorbereiteten Aufnahme 52 in der Umfangsfläche 19 des Zylinderkerns 12 befestigt. Wie gepunktet hervorgehoben, könnte der Permanentmagnet 32 auch in verschiedene andere, durch 30', 30" usw. punktiert verdeutlichte Richtungen seines Magnetfeldes in der gleichen Aussparung des Zylinderkerns 12 montiert sein. Der Sensor 35 ist in der Lage, die Richtung des Magnetfeldes zu detektieren, was noch näher anhand der Fig. 4 erläutert werden wird.

Der Sensor 32 kann aber auch die Feldstärke eines Permanentmagneten 32 ermitteln. Deshalb könnte man, alternativ zum Ausführungsbeispiel von Fig. 1 und 2, anstelle des Permanentmagneten 32 eine Leiste aus magnetisierbarem Material vorsehen, die, ähnlich wie im vorausbeschriebenen Fall bei der Sperrleiste 31, ebenfalls von einem im Zylinderkern 12 entfernt angeordneten Magneten beaufschlagt wird. Diese Leiste ist, ähnlich wie das Objekt 32 im Ausführungsbeispiel, unbeweglich im Zylinderkern 12 angeordnet, also eine Festleiste. Unterschiede im Magnetverhalten einer solchen Festleiste können bei dieser Alternative einfach dadurch entstehen, daß man ihre axiale Länge variiert, was vom Sensor 35 bei der Drehbewegung 23 des Zylinderkerns 12 ermittelt wird.

Eine Varianz der vorbeschriebenen Permanentmagnete 32 kann also, statt durch Veränderung der Richtung des Magnetfeldes, durch eine Änderung der Magnetfeldstärke erreicht werden. Auch diese Änderungen lassen sich vom Sensor 35 ermitteln. Eine weitere Varianz könnte darin bestehen, daß man den bzw. die Permanentmagneten 32 an anderen Stellen des Zylinderkerns 12 anordnet, was der Sensor 35 natürlich sofort feststellt. Man könnte auch mehr als einen Sensor 35 vorsehen und diese Sensoren an einen gemeinsamen elektronischen Auswerter 40 anschließen.

Ein Ausführungsbeispiel eines Auswerters 40 ist in Fig. 3 und 4 näher erläutert. Der Sensor 35 steht zunächst über eine elektrische Versorgungsleitung 43 und mit einem Vorschaltwiderstand 39 und eine Erdleitung 42 mit einer nicht näher gezeigten Spannungsquelle in Verbindung und besitzt zwei Signalleitungen 51, 51' für seine Meßwerte. Der Sensor 35 kann die genaue Richtung 30 des Magnetfeldes durch Messung von zwei zueinander senkrechten Feldkomponenten Bx und By bestimmen, was anhand von Fig. 4 noch näher erläutert werden wird. Dem Sensor kann ggf. ein nicht näher gezeigter Inverter nachgeschaltet sein. Es fallen zunächst elektrische Spannungen in Form eines Analogsignals an. Diese werden in einem A/D-Konverter 26 in Digitalsignale 36 umgewandelt, was in Fig. 3 angedeutet ist. Anstelle eines solchen Konverters 26 könnte man auch einen Komparator verwenden. Wegen der Bx und By-Messung des Magnetfeldes über die beiden Signalleitungen 51, 51' fallen im vorliegenden Fall die Digitalsignale 36 zweifach an. Diese Signale 36 gelangen als "Eingangswerte" in einen Rechner 27 (Mikrocomputer), der mit einem Datenspeicher 28 versehen ist. Diese Verbindung zwischen 26, 27 kann auch aus einer 4- oder 8-bit Parallel-Verbindung bestehen, wie durch Strichelungen in Fig. 3 angedeutet ist. Außerdem ist der Sensor 35 unmittelbar über eine Weckleitung 25 mit dem Microcomputer verbunden.

Der Datenspeicher 28 ist ein EEPROM (electrical eraised programmable read only memory). Zum Rechner 27 und Datenspeicher 28 gehört ein Taktgeber 29. Am Ausgang des Auswerters 40 fällt ein entsprechendes Wechselsignal an, das durch einen aus dem Widerstand 37 und einer Kapazität 38 verdeutlichten Filter geglättet wird. An der aus dem Auswerter 40 herausführenden Leitung 41 ergibt sich also ein bestimmtes Gleichstromsignal. Im Speicher 28 kann der Auswerter 40 auf individuelle, bestimmte Digitalsignale 36 der beiden Meßkomponenten Bx und By eingestellt werden.

Dann spricht der Auswerter 40 nur dann an, wenn vom Sensor 35 diese eingestellten Signale ermittelt werden. Nur in diesem Fall gibt der Auswerter 40 ein Steuersignal an die Ausgangsleitung 41 ab, an welche eine nicht näher gezeigte elektrische Schalteinrichtung, z. B. die Motorelektronik eines Kraftfahrzeugs, angeschlossen ist.

In der Fig. 4 ist die Arbeitsweise der erfindungsgemäßen Vorrichtung verdeutlicht, wobei die horizontale Achse die Zeitachse ist. Die vertikale Achse verdeutlicht zunächst die am Ort des Sensors 35 ermittelten Werte der magnetischen Feldstärke Bx und By, dann aber auch die sich dabei im Auswerter 40 ergebenden Signale 36 der Spannungen. Wegen der beiden Meßkomponenten für Bx und By ergeben sich im vorliegenden Fall im Auswerter zwei Spannungen Ux, Uy, die in Fig. 4 mit Linien unterschiedlicher Dicke veranschaulicht worden sind. Diese werden vom Rechner 27 in folgender Weise ausgewertet.

Die in Fig. 4 gestrichelten Anfangsstücke 44, 44' der beiden Kurven Ux und Uy zeigen den Ausgangszustand der erfindungsgemäßen Vorrichtung, vor dem Einstecken des Schlüssels 20. In der Ausgangsdrehstellung von Fig. 1 fällt am Sensor 35 zunächst das von der Sperrleiste in ihrer Sperrlage 31' erzeugte Magnetfeld an, was aber den Auswerter 40 nicht aktiviert. Der Sensor 35 ist, wie durch strichpunktierte Linien in der Schnittdarstellung von Fig. 2 veranschaulicht ist, an jener Stelle im Zylindergehäuse 11 angeordnet, an welcher sich in der Ausgangsstellung des Zylinderkerns 12 die Sperrleiste 31 befindet. Der Auswerter 40 befindet sich dabei in einer Ausschaltstellung oder einer stand-by-Stellung. Das mit der erfindungsgemäßen Vorrichtung am Lenkschloß ausgerüstete Kraftfahrzeug steht. Das ändert sich aber bereits, wenn man den passenden Schlüssel 20 in den Zylinderkern 12 einsteckt.

Wenn das Kraftfahrzeug gestartet werden soll, muß natürlich zunächst der Schlüssel 20 in den Zylinderkern 12 eingesteckt werden. Das soll im Zeitpunkt t1 des Arbeitsdiagramms von Fig. 4 geschehen. Durch die bereits erwähnte Absenkbewegung der Sperrleiste aus ihrer Sperrlage 31' von Fig. 1 in ihre Freigabelage 31 sackt auch das vom Sensor 35 erfaßte Magnetfeld ab. Das ist in Fig. 4 durch vertikale Kurvenstücke 45, 45' für Ux und Uy veranschaulicht. Erst wenn die Änderung 45, 45' innerhalb bestimmter Grenzwerte liegt, die im Datenspeicher 28 eingestellt sind, wird der Auswerter 40 geweckt. Dafür wird die bereits erwähnte Weckleitung 25 genutzt, die den Sensor 35 mit dem Rechner 27 unmittelbar verbindet. Eine außerhalb dieser Grenzwerte liegende Magnetfeldänderung bei 45, 45' nimmt der Auswerter 40 nicht zur Kenntnis. Wenn dann die Drehung des Schlüssels 20 nicht sofort einsetzt, folgt zunächst ein mehr oder weniger langes horizontales Kurvenstück 46, 46' für Ux und Uy.

Vom Zeitpunkt t2 von Fig. 4 an soll eine Drehurg 23 des Zylinderkerns 12 erfolgen. Dann entfernt sich zunächst die magnetische Sperrleiste 31 vom Sensor 35, weshalb es zu einem bogenförmigen Abfall 47, 47' der beiden Kurven kommt. Dann kommt aber der Permanentmagnet 32 zunehmend in den Meßbereich des Sensors 35, was sich in einem entsprechenden Anstieg 48, 48' der beiden Kurven auswirkt. Wenr der Permanentmagnet 32 in die naheste Position gelangt ist, so ergeben sich für beide Kurven Ux und Uy die entsprechenden Maxima 50, 50'. Das geschieht, gemäß Fig. 4, im Zeitpunkt t3. Dann, bei der Weiterdrehung 23 des Zylinderkerns 12, kommt es wieder zum Kurvenabfall 49, 49', weil sich der Permanentmagnet 32 zunehmend vom Sensor 35 entfernt.

Das Kriterium für die Aktivierung des Auswerters 40 kann die Differenz ΔU sein, der sich aus der Differenz der beiden Kurven Ux und Uy z. B. im Bereich der beiden Maxima 50, 50' ergibt. Würde man im Zylindergehäuse 11 einen anderen Zylinderkern 12 verwenden, bei dem die Richtung 30 vom Magnetfeld des am gleichen Ort befindlichen Permanentmagneten 32 in eine andere Richtung weist, z. B. in Richtung 30' oder 30" von Fig. 2, so verändern sich bei der Schlüsseldrehung 23 die Höhen der beiden Maxima 50, 50' von Fig. 4 auf andere Werte. Das wirkt sich in einer anderen Spannungsdifferenz ΔU aus. Der Datenspeicher 28 im Auswerter 40 ist aber auf bestimmte Werte von ΔU eingestellt, weshalb bei einem Austausch der Zylinderkerne 12 der Auswerter 40 nicht mehr aktiviert wird. Auf diesem Wege ist daher ein Diebstahl des Kraftfahrzeugs nicht mehr möglich. Zu der mechanischen Codierung zwischen dem Schlüssel 20 und dem Zylinderkern 12 in Verbindung mit der Sperrleiste 31 kommt bei der Erfindung noch eine magnetische Codierung. Dieser Magnetcode ist im Ausführungsbeispiel durch die Richtung 30, 30' bzw. 30" usw. des Magnetfelds von nur einem einzigen, am gleichen Ort des Zylinderkerns 12 angeordneten Permanentmagneten 32 bestimmt. Durch Kombination einer Vielzahl von solchen magnetisch unterschiedlichen Zylinderkernen 12 mit einem Zylindergehäuse 11 gleicher Type erhält man eine entsprechende Vielzahl von Schließzylindern 10 mit zueinander unterschiedlichem Magnetcode.

Wie bereits erwähnt wurde, ist im Ausführungsbeispiel die Sperrleiste 31 selbst ein Permanentmagnet, was ebenfalls zur Differenzierung des Magnetcodes benutzt werden kann. Im Datenspeicher 28 des Auswerters 40 können die Längen bzw. die Differenzen der vertikalen Kurvenstücke 45, 45' gespeichert sein, die sich beim Einstecken des Schlüssels 20 in den Zylinderkern 12 ergeben. Das kann bereits für den vorbeschriebenen Einschaltimpuls des Auswerters 40 genutzt wrden. Verwendet man für die jeweiligen Sperrleisten 31 bei einer Gruppe von Zylinderkernen 12, die mit einem übereinstimmenden Zylindergehäuse 11 kombiniert werden können, unterschiedliche magnetische Eigenschaften, so wird bereits dadurch ein spezifischer Magnetcode erreicht. Dieser Magnetcode der Sperrleiste 31 kann mit den aus dem bzw. den Permanentmagneten 32 sich ergebenden weiteren Magnetcode kombiniert werden. Dadurch ergibt sich eine entsprechend große Vielfalt von Schließzylindern 10, die sich magnetisch voneinander unterscheiden.

### Bezugszeichenliste:

- 10: Schließzylinder
- 11: Zylindergehäuse
- 12: Zylinderkern
- 13: Schlüsselkanal in 12
- 14: Zuhaltung in 12
- 15: Federbelastung von 14
- 16: Feder für 15
- 17: Steuerfläche an 14 für 21
- 18: Längskante von 14
- 19: Umfanesfläche von 12
- 20: Schlüssel
- 21: Stellmittel von 20, Profilbahn
- 22: Gehäusenut von 11
- 23: Drehpfeil für 12, Zylinderdrehung
- 24: Randaussparung
- 25: Weckleitung
- 26: A/D-Konverter
- 27: Rechner, Mikrocomputer
- 28: Datenspeicher von 27
- 29: Taktgeber für 27, 28
- 30, 30', 30": Magnetfeld-Richtung von 32
- 31: Sperrleiste (Freigabelage)
- 31': Sperrlage von 31
- 32: Permanentmagnet
- 33: Kraftpfeil für 31, Federbelastung
- 34: elektrische Versorgungsleitung für 35
- 35: Sensor
- 36: Digitalsignal für 27
- 37: Filter-Widerstand
- 38: Filter-Kapazität
- 39: Vorschaltelement
- 40: Auswerter
- 41: Ausgangsleitung von 40
- 42: Erdleitung von 40
- 43: Versorgungsleitung von 40
- 44, 44': Anfangsstück der Kurve von Ux bzw. Uy
- 45, 45': vertikales Kurvenstück von Ux bzw. Uy (Fig. 4)
- 46, 46': horizontales Kurvenstück von Ux bzw. Uy
- 47, 47': bogenförmiger Abfall von Ux bzw. Uy
- 48, 48': ansteigendes Kurvenstück von Ux bzw. Uy
- 49, 49': abfallendes Kurvenstück von Ux bzw. Uy
- 50, 50': Maximum von Ux bzw. Uv
- 51, 51': Signalleitung für x- bzw. y-Komponente des magnetischen Meßwertes
- 52: Aufnahme in 19 für 32
- 53: Sperrkanal in 11 für 14

## Patentansprüche

1. Vorrichtung mit einem schlüsselbetätigbaren Schließzylinder (10) und mit einer elektrischen Schalteinrichtung,
die in Abhängigkeit von der Schlüsseldrehung (23) bestimmte elektrische Funktionen wirksam bzw. unwirksam setzt, insbesondere elektronische Wegfahrsperren für ein Kraftfahrzeug,
wobei der Schließzylinder (10) aus einem ortsfesten Zylindergehäuse (11) und einem darin drehgelagerten Zylinderkern (12) besteht,
im Inneren des Zylinderkerns (12) außer Zuhaltungen (14) zu einer Drehsperrung im Zylindergehäuse (11) auch ein Schlüsselkanal (13) zur Aufnahme des Schlüssels (20) zwecks Entsperrung des Zylinderkerns (12) vorgesehen sind,
am Umfang (19) des Zylinderkerns (12) mindestens ein Permanentmagnet (32) angeordnet ist
und im Zylindergehäuse (11) außer wenigstens einem Sperrkanal für die Zuhaltungen (14) mindestens noch ein Sensor (35) angeordnet ist, der auf den bzw. auf die Permanentmagnete (32) des Zylinderkerns anspricht,
wobei der Sensor (35) an einen Auswerter (40) angeschlossen ist, der Sensor (35) bei der Schlüsselbetätigung anspricht und über den Auswerter (40) die Schalteinrichtung aktiviert,
**dadurch gekennzeichnet,**
**daß** dem Zylindergehäuse (11) mit einer vorgegebenen festen Anordnung des Sensors (35) eine Gruppe von unterschiedlichen Zylinderkernen (12) zugeordnet ist,
die zwar zueinander übereinstimmende Zuhaltungen (14) besitzen und mit dem gleichen Schlüssel (20) betätigbar sind, sich aber wenigstens hinsichtlich eines der Permanentmagnete (32) voneinander magnetisch unterscheiden,
**daß** für die Vorrichtung jeweils ein Zylinderkern (12) aus dieser Gruppe ausgewählt und mit dem Zylindergehäuse (11) zu einem magnetischspezifischen Schließzylinder (10) gepaart ist,
der aufgrund des ausgewählten Zylinderkerns (12) einen Schließzylinder (10) mit einem bestimmten Magnet-Code bildet,
**daß** der Sensor (35) bei der Schlüsselbetätigung des Zylinderkerns (12) auf die magnetischen Unterschiede des Magnet-Codes achtet,
**daß** der Auswerter (40) auf den jeweiligen Magnet-Code des in der Vorrichtung benutzten Schließzylinders (10) einstellbar bzw. einprogrammierbar ist
und **daß** - nach dieser Einstellung bzw. Programmierung - der Auswerter (40) bei einer Schlüsselbetätigung (23) nur dann anspricht und die Schalteinrichtung aktiviert, wenn sich im Schließzylinder (10) der diesen Magnet-Code begründende ausgewählte Zylinderkern (12) befindet.

2. Vorrichtung nach Anspruch 1, **dadurch gekennzeichnet, daß** die verschiedenen Zylinderkerne (12) einer zusammengehörenden Gruppe zwar die gleiche Anzahl von Permanentmagneten (32) aufweisen,
und die Permanentmagnete (32) in den einzelnen Zylinderkernen (12) dieser Gruppe auch an den gleichen Stellen (52) angeordnet sind,
daß aber wenigstens einer dieser Permanentmagnete (32) hinsichtlich seiner Feldrichtung (30) und/oder hinsichtlich seiner Feldstärke sich gegenüber dem analogen Permanentmagneten (32) aller anderen Zylinderkerne (12) dieser Gruppe unterscheidet.

3. Vorrichtung nach Anspruch 1, **dadurch gekennzeichnet, daß** die Zylinderkerne (12) einer zusammengehörenden Gruppe zwar die gleiche Anzahl von Permanentmagneten (32) aufweisen,
aber wenigstens einer von ihnen lagemäßig (52) anders positioniert ist, als bei allen anderen Zylinderkernen (12) dieser Gruppe.

4. Vorrichtung nach einem oder mehreren der Ansprüche I bis 3, **dadurch gekennzeichnet, daß** der Sensor (35) bzw. die Sensoren aus einem magnetoresistiven Element bestehen.

5. Vorrichtung nach einem oder mehreren der Ansprüche 1 bis 4 mit einer radial beweglichen Sperrleiste (31) im Zylinderkern (12), die zwar bei abgezogenem Schlüssel (20) in einer den Zylinderumfang (19) radial überragenden Sperrlage (31') gehalten wird, wo sie in eine im Zylindergehäuse vorgesehene Nut (22) eingreift und eine Drehung (23) verhindert,
die aber bei eingestecktem ordnungsgemäßem Schlüssel (20) in eine abgesenkte Freigabelage gelangt, wo sie die Gehäusenut (22) frei gibt und eine Zylinderdrehung (23) mit dem Schlüssel (20) zuläßt,
**dadurch gekennzeichnet,**
**daß** die Sperrleiste (31) selbst ein Permanentmagnet ist oder magnetisierbar ist und der Sensor (35) an jener Stelle des Zylindergehäuses (11) sitzt, die mit der Sperrleiste (31) dann im wesentlichen radial ausgerichtet ist,
wenn sich der Zylinderkern (12) in einer Ausgangs-Drehstellung befindet, in welcher das Einstecken und Herausziehen des Schlüssels (20) möglich sind
und **daß** der Sensor (35) bereits beim Einstecken des ordnungsgemäßen Schlüssels (20) auf die im Auswerter (40) eingestellte bzw. einprogrammierte Änderung des Magnetfeldes (45, 45') anspricht, die sich durch das Absenken der Sperrleiste (31) aus ihrer Sperrlage (31') in ihre Freigabelage ergibt und den Auswerter (40) aktiviert.

## Claims

1. Device with a key-operated lock cylinder (10) and with an electrical switching device,
which activates or deactivates certain electrical functions, in particular electronic immobilisers for a motor vehicle, as a function of the rotation of the key (23),
wherein the lock cylinder (10) consists of a stationary cylinder housing (11) and a cylinder core (12) supported in the housing with freedom of rotation,
wherein, in the interior of the cylinder core (12), in additional to tumblers (14) to prevent the core from turning in the cylinder housing (11), a key channel (13) is also provided to accept the key (20) which can unlock the cylinder core (12).
wherein at least one permanent magnet (32) is mounted on the circumference (19) of the cylinder core (12),
and wherein, in the cylinder housing (11), in addition to at least one locking channel for the tumblers (14), at least one sensor (35) is also provided, which responds to the permanent magnet or magnets (32) on the cylinder core,
wherein the sensor (35) is connected to an evaluator (40), the sensor (35) responding by activating the switching device by way of the evaluator (40) when the lock is operated by the key,
**characterised in that**
a group of different cylinder cores (12) is assigned to the cylinder housing (11) with a sensor (35) in a predetermined, fixed location, where, although the cores have the same tumblers (14) and can be operated by the same key (20), they differ from each other magnetically with respect to at least one of the permanent magnets (32),
**in that**, for each application of the device, one cylinder core (12) is selected from this group and paired with the cylinder housing (11) to form a magnet-specific lock cylinder (10),
which, because of the selected cylinder core (12), forms a lock cylinder (10) with a specific magnetic code,
**in that** the sensor (35) detects the magnetic differences in the magnetic code upon operation of the cylinder core (12) by the key,
**in that** the evaluator (40) can be set or programmed for the specific magnetic code of the lock cylinder (10) used in the device, and
**in that**, after this setting or programming, the evaluator (40) will respond by activating the switching device upon operation (23) of the key only when the selected cylinder core (12) upon which the magnetic core is based is in the lock cylinder (10).

2. Device according to Claim 1, **characterised in that**, although the various cylinder cores (12) of a related group have the same number of permanent magnets (32),
and the permanent magnets (32) in the individual cylinder cores (12) of this group are also mounted in the same locations (52),
at least one of these permanent magnets (32) differs with respect to its field orientation (30) and/or with respect to its field strength from the analogous permanent magnets (32) of all the other cylinder cores (12) of this group.

3. Device according to Claim 1, **characterised in that** although the cylinder cores (12) of a related group have the same number of permanent magnets (32),
at least one of them is in a position (52) that is different from that of all the other cylinder cores (12) of this group.

4. Device according to one or more of Claims 1 to 3, **characterised in that** the sensor (35) or sensors consist of a magnetoresistive element.

5. Device according to one or more of Claims 1 to 4 with a radially movable locking bar (31) in the cylinder core (12), which bar, after the key (20) has been removed, is held in a locking position (31') projecting radially beyond the cylinder circumference (19), where it engages in a groove (22) provided in the cylinder housing and thus prevents rotation (23) of the core,
but which arrives in a lowered release position when a properly fitting key (20) is inserted, in which position it disengages itself from the housing groove (22) and allows the key (20) to turn the cylinder (23),
**characterised in that**
the locking bar (31) is itself designed as a permanent magnet or is magnetisable, the sensor (35) being seated on the point of the cylinder housing (11) which is substantially radially aligned with the locking bar (31),
when the cylinder core (12) is located in the starting rotational position in which the key (20) can be inserted and removed,
and **in that**, as soon as a properly fitting key (20) is inserted, the sensor (35) responds to the change in the magnetic field (45, 45') which is set or programmed into the evaluator (40) and which occurs as a result of the lowering of the locking bar (31) out of its locking position (31') into its release position, and said change activates the evaluator (40).

## Revendications

1. Dispositif avec un cylindre de fermeture (10) actionnable par clé et avec un dispositif de manoeuvre électrique,
qui, en fonction de la rotation de clé (23), met en action ou hors d'action des fonctions électriques déterminées, en particulier des dispositifs d'empêchement de roulage électroniques pour un véhicule automobile,
le cylindre de fermeture (10) étant constitué d'un boîtier de cylindre (11) localement fixe et d'un noyau de cylindre (12) y étant monté à rotation,
à l'intérieur du noyau de cylindre (12), outre des gâchettes (14) devant assurer un blocage en rotation dans le boîtier de cylindre (11), étant également prévu un canal à clé (13) pour recevoir la clé (20) dans le but de débloquer le noyau de cylindre (12),
au moins un aimant permanent (32) étant disposé sur la périphérie (19) du noyau de cylindre (12),
et, dans le boîtier de cylindre (11), outre au moins un canal de blocage pour les gâchettes (14), étant disposé au moins encore un capteur (35) réagissant à l'aimant ou aux aimants permanent(s) (32) du noyau de cylindre,
le capteur (35) étant raccordé à un dispositif d'évaluation (40), le capteur (35) réagissant en cas d'actionnement de la clé et activant le dispositif de manoeuvre, par l'intermédiaire du dispositif d'évaluation (40),
***caractérisé en ce que***
un groupe de noyaux de cylindre (12) différents est associé au boîtier de cylindre (11) avec un agencement fixe prédéterminé du capteur (35),
noyaux de cylindre (12) qui comportent les gâchettes (14) qui, certes, coïncident les unes les autres et sont actionnables par la même clé (20), mais qui se distinguent au moins magnétiquement les unes les autres du point de vue de l'un des aimants permanents (32),
**en ce que**, pour le dispositif, chaque fois un noyau de cylindre (12) est sélectionné dans ce groupe et est appairé au boîtier de cylindre (11), pour former un cylindre de fermeture (10) magnétiquement spécifique,
qui, du fait du noyau de cylindre (12) sélectionné, forme un cylindre de fermeture (10) ayant un code magnétique déterminé,
**en ce que** le capteur (35), en cas d'actionnement par clé du noyau de cylindre (12), veille aux différences magnétiques pouvant exister au niveau du code magnétique, en que le dispositif d'évaluation (40) est réglable ou programmable au code magnétique spécifique du cylindre de fermeture (10) utilisé dans le dispositif,
et **en ce que** - après avoir procédé à ce réglage ou programmation - le dispositif d'évaluation (40), en cas d'actionnement par clé (23), ne réagit et n'active le dispositif de manoeuvre que lorsque le noyau de cylindre (12) sélectionné, motivant ce code magnétique, se trouve dans le cylindre de fermeture (10).

2. Dispositif selon la revendication 1, **caractérisé en ce que** les différents noyaux de cylindre (12) d'un groupe allant ensemble présentent, certes, le même nombre d'aimants permanents (32),
et les aimants permanents (32) situés dans les différents noyaux de cylindre (12) de ce groupe étant également disposés aux mêmes emplacements (52),
mais **en ce que**, cependant, au moins l'un de ces aimants permanents (32) se distingue, du point de vue de sa direction de champ (30) et/ou de son intensité de champ, vis-à-vis de l'aimant permanent (32) analogue de tous les autres noyaux de cylindre (12) de ce groupe.

3. Dispositif selon la revendication 1, **caractérisé en ce que** les noyaux de cylindre (12) d'un groupe allant ensemble présentent, certes, le même nombre d'aimants permanents (32),
mais au moins l'un d'eux est positionné (52) différemment que tous les autres noyaux de cylindre (12) de ce groupe.

4. Dispositif selon l'une ou plusieurs des revendications 1 à 3, **caractérisé en ce que** le capteur (35) ou les capteurs est/sont constitué(s) d'un élément magnétorésistif.

5. Dispositif selon l'une ou plusieurs des revendications 1 à 4, avec une bande de blocage (31) mobile radialement dans le noyau de cylindre (12), qui, certes, est maintenue dans une position de blocage (31') en saillie radialement de la périphérie de cylindre (19), lorsque la clé (20) est extraite, position où elle s'engage dans une rainure (22) prévue dans le boîtier de cylindre et empêche toute rotation (23),
mais qui, lorsque la clé (20) conforme est enfichée, arrive en une position de libération abaissée, à laquelle elle quitte la rainure de boîtier (22) et permet d'effectuer une rotation de cylindre (23) avec la clé (20),
***caractérisé en ce que***
la bande de blocage (31) elle-même est un aimant permanent ou est magnétisable et le capteur (35) est monté en un endroit du boîtier de cylindre (11) qui est orienté alors sensiblement radialement par rapport à la bande de blocage (31),
lorsque le noyau de cylindre (12) se trouve en une position de rotation initiale, à laquelle l'enfichage et l'extraction de la clé (20) sont possibles,
et **en ce que** le capteur (35), déjà lors de l'enfichage de la clé (20) conforme, réagit à la modification de champ magnétique (45, 45'), réglée ou programmée dans le dispositif d'évaluation (40), qui résulte de l'abaissement de la bande de blocage (31), de sa position de blocage (31') à sa position de libération, et active le dispositif d'évaluation (40).
